# DEMANDE DE BREVET EUROPEEN

(11) **EP 0 896 462 A1**
(43) Date de publication de la demande: **10.02.1999**
(21) Numéro de dépôt: 98202629.6
(22) Date de dépôt: 04.08.1998
(51) Int. Cl.: H04M 1/04

(54) **Mécanisme de support et récepteur de radiocommunication portable muni d'un tel mécanisme**

(30) Priorité: 07.08.1997 FR 9710128
(71) Demandeur: Koninklijke Philips Electronics N.V., 5621 BA Eindhoven (NL)
(72) Inventeur: Richez, Bertrand, 75008 Paris (FR)
(74) Mandataire: Pyronnet, Jacques

(57) **Abrégé**

Ce mécanisme de support (3) pour téléphone portable, notamment, est constitué par des moyens de transport et de positionnement pour transporter ledit récepteur accroché à un vêtement ou une ceinture et pour poser le récepteur en position redressée sur un meuble. Selon l'invention, les moyens de transport et de positionnement consistent en un clip (4) destiné à être monté fixe par une première extrémité fixe (6) en haut de la face arrière du récepteur et en une patte basculante (5) qui pivote autour d'un axe (8) agencé à la deuxième extrémité (7) élastiquement mobile du clip.
Application : téléphone cellulaire

## Description

La présente invention concerne un mécanisme de support pour récepteur de radiocommunication portable, téléphone portable notamment, constitué par des moyens de transport et de positionnement pour transporter ledit récepteur accroché à un vêtement ou une ceinture et pour poser le récepteur en position redressée sur un meuble.

Elle concerne également un récepteur de radiocommunication équipé d'un mécanisme de support.

L'invention s'applique entre autres aux téléphones cellulaires.

A ce jour les téléphones cellulaires et autres téléphones sans fil, encore appelés mobiles ou téléphones portables, et nommés appareil ou récepteur dans la suite du texte, sont devenus d'une taille suffisamment petite pour être transportés par un utilisateur, accrochés à une ceinture ou même à un vêtement, dans une poche. Pour un tel mode de transport, il faut veiller cependant à ce que l'appareil ne se décroche pas trop facilement. A cet effet, il est généralement prévu un clip de retenue, monté le plus souvent à l'arrière de l'appareil, ce clip étant destiné à agrafer l'appareil à la ceinture, ou à la poche qui le contient.

Une autre fonction de support de l'appareil consiste à pouvoir le poser sur une table de façon ergonomique, c'est-à-dire en position plus ou moins inclinée, plutôt qu'à plat. Ainsi, le dispositif d'affichage de l'appareil est plus lisible et il est plus facile à saisir, de manière sure, lorsqu'on souhaite le manipuler.

De plus, une telle position est favorable à de bonnes conditions d'émission-réception par l'antenne.

L'invention se place dans un tel contexte où l'on souhaite procurer au mobile à la fois les deux fonctions de support précitées, contre un utilisateur ou sur une table.

Dans les appareils connus qui comportent un mécanisme avec les deux fonctions de support, ces deux fonctions sont le plus souvent différenciées, le mécanisme comportant deux éléments nettement séparés et articulés tous deux sensiblement en un même endroit situé à la partie arrière haute de l'appareil. On peut citer à cet égard le brevet US 5 590 860 dont le mécanisme relativement complexe comporte quatre éléments parmi lesquels les deux éléments nettement séparés précités, référencés 20 et 30 et qui ont sensiblement la même longueur. L'élément 30 peut occuper différentes positions angulaires par rapport au clip 20, ce qui permet de placer l'appareil auquel est fixé le mécanisme de support sur un plan selon plusieurs inclinaisons de l'ordre de 30 à 40 degrés. Ce mécanisme est complexe et donc cher et fragile. Par ailleurs les inclinaisons qu'il procure sont plus proches de l'horizontale que de la verticale.

Un but de l'invention est de fournir un mécanisme de support qui soit à la fois simple et robuste.

Un autre but est de fournir un mécanisme de support qui permette de positionner sur une table un récepteur de radio-communication portable selon une orientation qui est assez proche de la verticale.

A cet effet le mécanisme de support décrit au premier paragraphe est remarquable en ce que lesdits moyens de transport et de positionnement consistent en un clip destiné à être monté fixe par une première extrémité fixe en haut de la face arrière dudit récepteur et en une patte basculante qui pivote autour d'un axe agencé à la deuxième extrémité élastiquement mobile dudit clip.

Le clip, de facture classique comme celui d'un capuchon de stylo, par exemple, est apte à résister aux chutes.

Un mode de réalisation avantageux de l'invention consiste en ce que la patte basculante comporte deux positions extrêmes, une position repliée où elle est refermée sur ledit clip, en vue du transport, et une position complètement dépliée, dans laquelle elle peut servir de patte support sur un plan horizontal pour le récepteur, selon une orientation du récepteur proche de la verticale.

D'autres positions en rotation relatives entre le clip et la patte basculante permettant d'obtenir des orientations plus inclinées et plus stables du récepteur.

De préférence, les moyens de positionnement relatif du clip et de la patte sont constitués par des bossages qui coopèrent avec des creux de forme complémentaire, les bossages et les creux étant aménagés dans des faces latérales du clip et de la patte disposées en regard, à proximité immédiate de l'axe.

Selon un mode de réalisation préféré de l'invention, le clip est en forme de fourche à deux dents et la patte basculante occupe l'espace situé entre les dents, dans sa position repliée où elle est refermée sur le clip.

De préférence le clip et la patte sont réalisés en un polyamide du type nylon ou rilsan ou en polypropylène et fabriqués par moulage par injection à chaud.

La description qui suit faite en regard des dessins annexés, le tout donné à titre d'exemple non limitatif, fera bien comprendre comment l'invention peut être réalisée.
La figure 1 représente en A vu de dos et en B vu de côté, un récepteur de télécommunication muni d'un mécanisme de support selon l'invention.
La figure 2 représente en perspective le mécanisme de support selon l'invention, en vue éclatée.
La figure 3 montre, grossies, deux parties du mécanisme de la figure 2 où sont prévus des moyens de positionnement relatif du clip et de la patte support.
La figure 4 représente en perspective avec arrachement, un mode de réalisation de l'invention pour la fixation du clip à une ceinture.
La figure 5 représente en perspective avec arrachement un perfectionnement du clip selon l'invention.

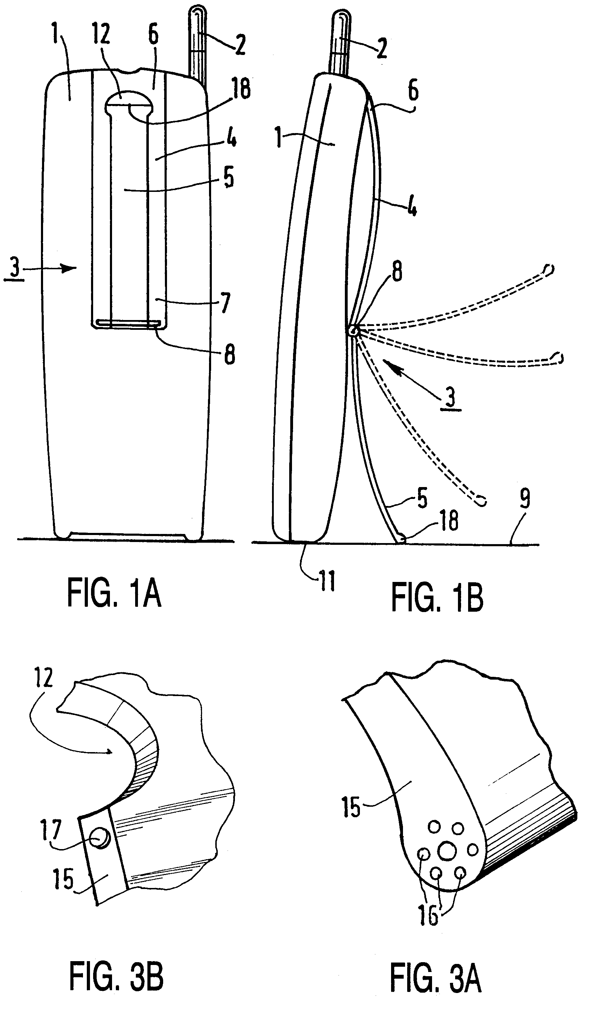

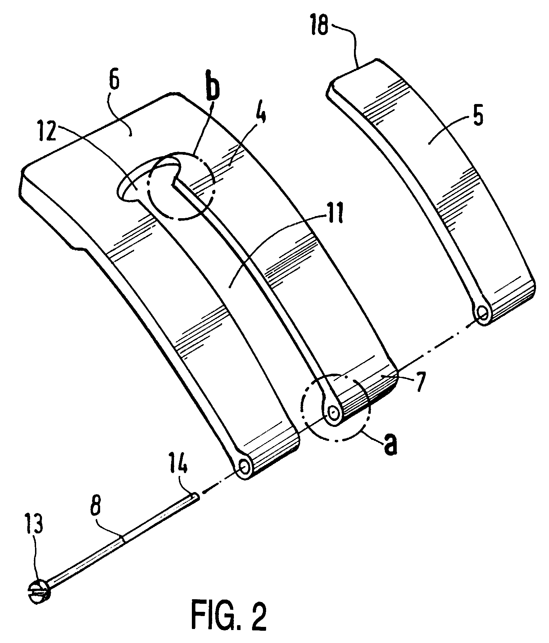

Le récepteur de radiocommunication représenté à la figure 1, qui est ici un téléphone portable nommé appareil dans la suite du texte, comprend un corps principal 1, avec une antenne 2 pour recevoir (ou émettre) des ondes radio à partir d'un (vers un) émetteur non représenté. L'appareil comporte aussi un mécanisme de support 3 qui se compose d'un clip 4 et d'une patte basculante 5. Le clip 4 est d'un type connu, semblable à celui d'un capuchon de stylo, mis à part le fait que sa largeur, proportionnée à celle de l'appareil, est plus grande. Le clip 4, réalisé en un matériau élastique, est monté fixe par son extrémité supérieure 6 en haut de la face arrière du récepteur. Le montage peut être effectué au moyen de vis par exemple ou par insertion à force dans un logement du corps 1 prévu à cet effet.

La deuxième extrémité 7 du clip 4, qui appuie contre le corps 1, au repos, est élastiquement mobile et comporte un axe 8 qui traverse une extrémité de la patte basculante 5. La patte 5 peut pivoter autour de l'axe 8 entre une position repliée, représentée à la figure 1A, ou elle se confond avec le clip 4 et une position complètement dépliée telle que représentée en trait plein à la figure 1B. Les longueurs ajoutées du clip 4 et de la patte 5 sont telles que l'appareil 1 s'étend, figure 1B, sur un plan horizontal 9 selon une direction proche de la verticale, étant entendu que l'appareil est supporté par une arête inférieure et la deuxième extrémité 18 de la patte 5, ces deux segments de droite formant un trapèze (non représenté) à l'intérieur duquel se trouve la projection verticale du centre de gravité de l'appareil. On notera que dans cette position sensiblement verticale, l'appareil est facile à saisir, en l'état, puis à reposer dans la même position, sur une table.

On notera par ailleurs que, la batterie de l'appareil étant placée à sa partie inférieure, le centre de gravité de l'appareil se situe avantageusement plus bas que la cote de l'axe 8.

A la figure 1B on a aussi représenté en trait interrompu d'autres positions en rotation de la patte 5 autour de l'axe 8, qui permettent d'obtenir par exemple des inclinaisons de 75°, 52°, 41°.

Dans la position de la figure 1A, le récepteur peut être accroché de façon connue à une poche de veste ou de chemise ou encore à une ceinture ou un maillot de bains.

Un mécanisme de support pour un récepteur tel que celui de la figure 1 est représenté à la figure 2.

Le clip proprement dit 4 se compose d'une fourche à deux dents entre lesquelles s'étend un espace en forme de fente 11 qui se termine à sa partie supérieure par une partie évasée 12. La patte en forme de languette 5 est conçue pour occuper l'espace 11, en position repliée, sauf la partie évasée 12.

De préférence, le clip et la patte sont réalisés en une résine thermoplastique, en polyamide tel que du nylon ou du rilsan ou en polypropylène, ce qui leur confère une légère élasticité et une grande robustesse, leur épaisseur étant de l'ordre de 2 à 3 mm. Clip et patte peuvent être obtenus par moulage par injection à chaud.

L'axe 8, qui solidarise à rotation les pièces 4 et 5 est de préférence en métal ; en acier, par exemple. Il peut comporter à une extrémité une tête 13. Pour le montage du mécanisme, l'axe 8 est enfoncé avec léger serrage à travers l'extrémité libre d'une première dent du clip 4, puis à travers une extrémité de la patte 5 et à travers l'extrémité de l'autre dent du clip 4, jusqu'à ce que la tête 13 soit au contact de la première dent et que l'autre extrémité 14 dépasse légèrement à l'extérieur de la deuxième dent. Le montage se termine par bouterollage de l'extrémité 14 de l'axe, ce qui crée un léger évasement de l'extrémité 14. Ceci assure un léger serrage entre les pièces 4 et 5 et empêche l'axe 8 de ressortir de son logement.

Pour obtenir les différentes positions de la patte support représentées aux figures 1A et 1B, on peut prévoir que le serrage entre les pièces 8 et 4, 5 d'une part et le serrage entre les pièces 4 et 5 d'autre part est suffisamment fort pour maintenir de façon stable l'appareil avec les inclinaisons qui correspondent à ces positions, les forces de frottement mutuel entre les éléments 8, 4 et 5 étant nettement supérieures au poids de l'appareil. Cependant, pour pallier à une diminution possible de ces forces de frottement avec le temps et l'usage on préfère le mode de réalisation de la figure 3 qui représente des agrandissements des parties repérées a et b sur la figure 2.

Sur la figure 3A, la face latérale 15 d'une dent du clip 4 comporte, régulièrement disposées en cercle autour du trou pour l'axe 8, des irrégularités de surface 16, qui sont soit des creux, respectivement des bossages. De façon non représentée la patte 5 comporte sur sa face latérale située en vis à vis après montage, des irrégularités de surface complémentaires, c'est-à-dire des bossages, respectivement des creux, qui coopèrent par exemple de 30 en 30 degrés de rotation (12 irrégularités de surface autour de l'axe) pour fournir autant de positions stables pour l'appareil.

Ce dispositif peut être prévu d'un seul côté de la patte et de la dent correspondante ou, de préférence, des deux côtés.

A la figure 3B on a représenté une disposition semblable à celle de la figure 3A pour assurer un léger verrouillage de la patte contre le clip en position repliée de la patte, ce verrouillage pouvant par ailleurs être déjà assuré par le dispositif de la figure 3A. La face latérale 15 comporte à sa partie supérieure un bossage ou un creux 17, destiné à coopérer avec un creux ou un bossage complémentaire de la patte 5 situé en regard, lorsque cette dernière occupe l'espace constitué par la fente 11. Dans cette dernière position, l'extrémité mobile de la patte, référencée 18 sur les figures 1 et 2 débouche avec un léger dépassement dans la partie évasée 12. Cette partie évasée sert à l'introduction d'un doigt ou d'un ongle pour pouvoir accrocher l'extrémité 18 de la patte 5 afin de la faire basculer autour de l'axe 8 et de la placer dans l'une des positions représentées à la figure 1B notamment.

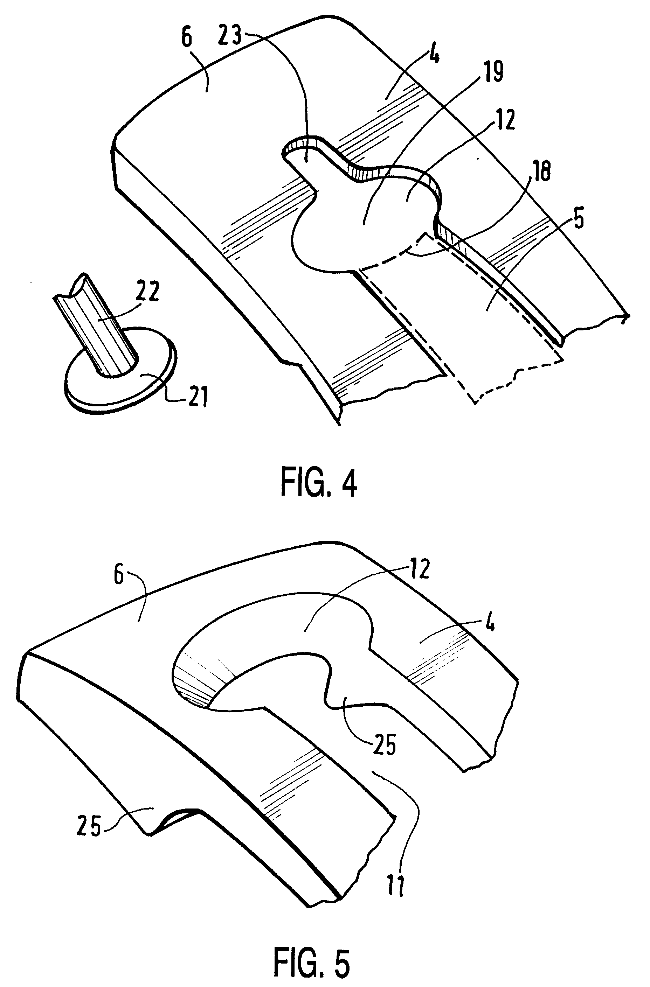

En examinant les figures 2 et 3B, on peut noter que la partie évasée 12 revêt une forme sensiblement circulaire. Cette forme peut être mise à profit pour constituer une boutonnière 19, ce qui est représenté à la figure 4. Sur cette figure on a représenté en trait interrompu l'extrémité 18 de la patte 5, logée dans la fente 11 et qui a une forme légèrement concave, de façon à compléter la forme circulaire de la partie évasée 12. Un bouton 21 qui peut être fixé par tout moyen connu à une ceinture (non représentée) est prévu pour être enfoncé au-delà de la partie évasée 12, après quoi la tige support 22 du bouton 21 s'engage dans un prolongement vers le haut de la fente 11, reférencé 23, au-delà de la partie 12, de manière à emprisonner le bouton 21 entre le clip et le corps 1 de l'appareil.

On notera que la partie évasée 12 et la boutonnière 19 pourraient être distinctes, la boutonnière étant alors placée le plus haut dans le clip, près de son extrémité d'ancrage 6 sur le corps 1 de l'appareil.

Des ouvertures telles que 12 ou 19 diminuent localement la largeur des branches du clip 4 ce qui peut rendre ce dernier plus fragile et en tout cas trop élastique à cet endroit. Pour compenser cet effet d'affaiblissement, on peut prévoir de renforcer localement en épaisseur les branches du clip, à l'endroit du ou des évasements fonctionnels du clip 4, comme représenté à la figure 5 où l'on peut noter un renforcement 25 au niveau de l'évasement 12 de la fente 11.

L'invention ne se limite pas aux exemples décrits ci-dessus. Le clip pourrait notamment ne comporter qu'une seule branche, auquel cas la patte lui serait juxtaposée en position repliée et la partie évasée 12 ne serait plus nécessaire.

## Revendications

1. Mécanisme de support pour récepteur de radiocommunication portable, téléphone portable notamment, constitué par des moyens de transport et de positionnement pour transporter ledit récepteur accroché à un vêtement ou une ceinture et pour poser le récepteur en position redressée sur un meuble, caractérisé en ce que lesdits moyens de transport et de positionnement consistent en un clip destiné à être monté fixe par une première extrémité fixe en haut de la face arrière dudit récepteur et en une patte basculante qui pivote autour d'un axe agencé à la deuxième extrémité élastiquement mobile dudit clip.

2. Mécanisme de support selon la revendication 1, caractérisé en ce que ladite patte basculante comporte deux positions extrêmes, une position repliée où elle est refermée sur ledit clip, en vue du transport, et une position complètement dépliée dans laquelle elle peut servir de patte support sur un plan horizontal pour ledit récepteur, selon une orientation du récepteur proche de la verticale.

3. Mécanisme de support selon la revendication 1 ou 2 caractérisé en ce que ledit clip est en forme de fourche à deux dents et que ladite patte basculante occupe l'espace situé entre lesdites dents, dans sa position repliée où elle est refermée sur le clip.

4. Mécanisme de support selon l'une des revendications 1 à 3 caractérisé en ce que ledit clip et ladite patte comportent, à proximité dudit axe des moyens de positionnement relatif entre eux, au moins pour lesdites position repliée et position complètement dépliée de ladite patte par rapport audit clip.

5. Mécanisme de support selon la revendication 4 caractérisé en ce que lesdits moyens de positionnement relatif sont constitués par des bossages qui coopèrent avec des creux de forme complémentaire, lesdits bossages et creux étant aménagés dans des faces latérales dudit clip et de ladite patte disposées en regard, à proximité immédiate dudit axe.

6. Mécanisme de support selon l'une des revendications 1 à 5 caractérisé en ce que ledit clip et ladite patte sont réalisés en un polyamide du type nylon ou rilsan ou en polypropylène et fabriqués par moulage par injection à chaud et que l'axe, passé avec léger serrage à travers des ouvertures dans le clip et la patte, est en métal.

7. Mécanisme de support selon l'une des revendications 3 à 6 caractérisé en ce que ledit espace situé entre les deux dents du clip comporte une boutonnière destinée à coopérer avec un bouton prévu à cet effet et fixé à une ceinture.

8. Mécanisme de support selon l'une des revendications 1 à 7 caractérisé en ce que ledit clip comporte des renforcements en épaisseur aux endroits où sa largeur est diminuée.

9. Récepteur de radiocommunication portable, caractérisé en ce qu'il est équipé d'un mécanisme de support selon l'une des revendications 1 à 7.
